# EUROPEAN PATENT APPLICATION

(11) **EP 1 073 217 A2**
(43) Date of publication of application: **31.01.2001**
(21) Application number: 00306364.1
(22) Date of filing: 26.07.2000
(51) Int. Cl.: H04B 7/26

(54) **Time slot assignment method**

(30) Priority: 26.07.1999 JP 21137899
(71) Applicant: NTT DoCoMo, Inc., Tokyo 100-6150 (JP)
(72) Inventor: Nakajima, Nobuo, Yokohama-shi, Kanagawa 236-0032 (JP)
(74) Representative: Luckhurst, Anthony Henry William

(57) **Abstract**

A plurality of time slots are assigned to each of cells. The respective number of time slots assigned to each cell can be changed. The respective number of time slots assigned to each cell may depend on a traffic demand in each cell and/or QoS for a user.

## Description

### BACKGROUND OF THE INVENTION

### 1. Field of the Invention

The present invention relates to a method of assigning time slots to each cell, and more particularly to a time slot assignment method used in a mobile communication system.

### 2. Description of the Related Art

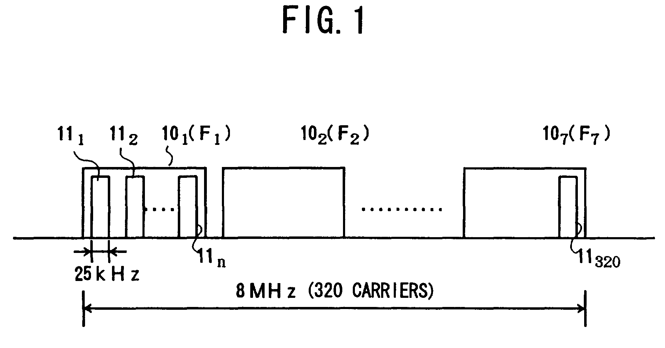

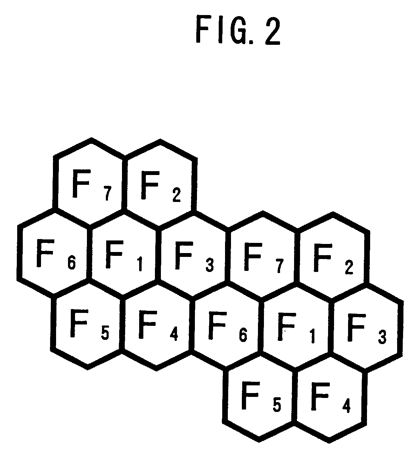

In a conventional mobile communication system, an applied frequency is divided as shown in Fig. 1, and frequencies are assigned to respective cells as shown in Fig. 2.

In the frequency assignment shown in the case of Fig. 1, 320 channels 11₁ through 11₃₂₀ are assigned within a bandwidth of 8 MHz in which one channel has a frequency range of 25 kHz. The 320 channels are grouped into seven channel groups 10₁ through 10₇. The seven channel groups 10₁ through 10₇ correspond to the frequencies used in cells F₁ through F₇ shown in Fig. 2. The cell F₁ uses the group 10₁ of frequencies 11₁ through 11ₙ. The cell F₂ uses the group 10₂ of frequencies. Similarly, the cell F₇ uses the group 10₇ of frequencies. As shown in Fig. 2, the frequencies are reused at a constant distance. In this manner, the frequencies are efficiently utilized.

The conventional mobile communication system is constructed mainly taking into consideration transmissions of voice signals. Thus, one channel is sufficient to have a frequency of 25 kHz. However, the conventional arrangements shown in Figs. 1 and 2 are not capable of realizing real-time transmissions of video data and a large amount of data in mobile communication systems in the multimedia age.

In mobile communication systems in the multimedia age, it is required to reliably transmit a large amount of data at a high bit rate. For example, it is expected to reliably transmit medical images in real time at a high bit rate. It is needed to consider a transmission in a bandwidth of 100 MHz in a mobile radio(cordless or wireless) communication in which a bit rate of 4 Mbps is selected when a mobile terminal or station is moving and a bit rate of 10 ― 20 Mbps is selected when the mobile station is stationary.

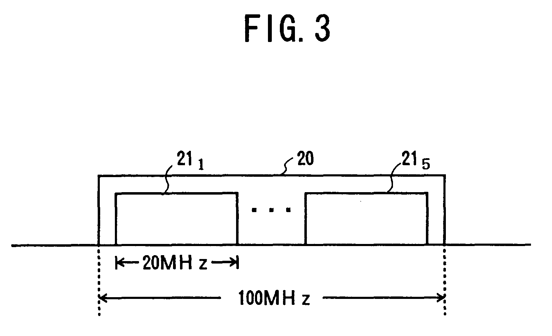

In a signal transmission of 20 MHz in a mobile communication system as shown in Fig. 3, even when a bandwidth of 100 MHz is assigned, only two frequency groups are available. This cannot realize the frequency arrangement as shown in Figs. 1 and 2.

In addition to the above, the frequencies cannot be efficiently utilized because the reallocation of frequencies to the cells shown in Fig. 2 cannot be employed.

Further, the following problems may arise in order to construct the mobile communication systems in the multimedia age.

First, only limited frequency resources are available at the time of multimedia age. Thus it is difficult to assign a pair of wide bandwidths to the uplink and downlink as the frequency assignment made conventionally.

Second, it is expected that a large mount of data is locally generated such as in the case of a file transfer and traffic is changed locally. In order to cope with local generation of data, it is required to employ a dynamic channel assignment based on the traffic demand.

Third, it is required to manage quality of service (QoS) appropriate for a variety of needs.

### SUMMARY OF THE INVENTION

It is a general object of the present invention to provide a time slot assignment method in which the above-mentioned problems are eliminated.

A more specific object of the present invention is to provide a time slot assignment method capable of transmitting a large amount of information in mobile communication systems in the multimedia age and providing quality of service appropriate for a variety of needs.

The above objects of the present invention are achieved by a time slot assignment method comprising a step of assigning one or a plurality of time slots to each cell so that the respective number of time slots assigned to each cell can be changed.

### BRIEF DESCRIPTION OF THE DRAWINGS

Other objects, features and effects of the present invention will become more apparent from the following detailed description when read in conjunction with the accompanying drawings, in which:
Fig. 1 is a diagram showing a conventional frequency assignment method;
Fig. 2 is a diagram of a conventional frequency assignment to cells;
Fig. 3 is a diagram showing problems to be solved by the invention;
Fig. 4 is a diagram of an example of a time slot assignment;
Figs. 5A and 5B show a time slot assignment method according to an embodiment of the present invention;
Fig. 6 is a diagram of interfering cells;
Fig. 7 is a diagram of interfering cells;
Fig. 8 is a diagram of a state-of-use table used in the embodiment of the present invention; and
Fig. 9 is a block diagram of a mobile communication system using the time slot assignment method of the present
invention.

### DESCRIPTION OF THE PREFERRED EMBODIMENTS

A description will be given, with reference to the accompanying drawings, of an embodiment of the present invention.

By way of example, it will now be assumed that the mobile communication system in the multimedia age has a specification such that a bit rate of 4 Mbps is selected when a mobile station is moving and a bit rate of 10 ― 20 Mbps is selected when the mobile station is stationary and that a bandwidth of 100 MHz is assigned.

### (Basic configuration)

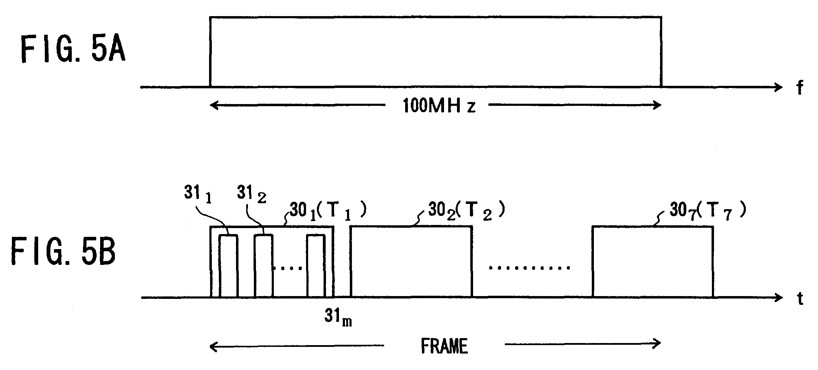

Fig. 5A shows a bandwidth of 100 MHz. A digital signal stream is divided into time slots assigned to cells, as shown in Fig. 5B.

A frame of the digital signal stream having the whole bandwidth of 100 MHz may be divided into time slots or may be divided into a plurality of parts, each of which parts is divided into time slots.

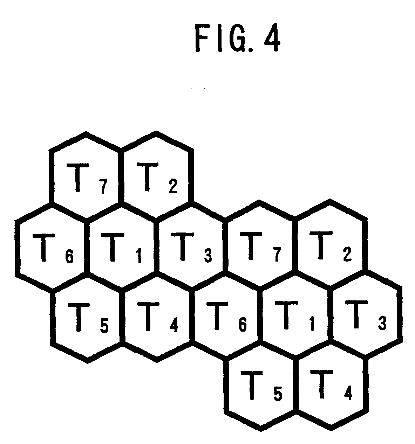

The number of time slots in one frame has m 31₁ ― 31ₘ in total (m is an integer equal to or greater than 2), and are grouped into, for example, seven time slot groups 30₁ ― 30₇. The seven time slot groups 30₁ ― 30₇ correspond to time slots assigned to cells T₁ ― T₇ shown in Fig. 4, respectively.

More particularly, the cell T₁ uses the time slot group 30₁ which are formed by time slots 31₁ ― 31ₘ, and the cell T₂ uses the time slot group 30₂. Similarly, the cell T₇ uses the time slot group 30₇. As shown in Fig. 4, the time slot groups can be reused so as to be separated at a given distance. Thus, the time slots can be efficiently utilized.

The arrangement depicted in Fig. 4 is such that T₁ is located at the center. However, similar arrangements can be illustrated when each of the cells T₂ ― T₇ is located at the center. The number of time slot groups is not limited to 7, but an arbitrary number of time slot groups can be selected. For example, three or four time slot groups may be arranged. Each cell may be arranged to have a sector structure. A microcell may be provided.

A radio base station of each cell assigned to the respective time slot group assigns a call an idle time slot among the time slots assigned thereto when the above call is initiated. The mobile station communicates using the assigned time slot.

### (Assignment of the number of time slots)

It is possible to dynamically assign the time slots, as compared with frequency assignment. In the case of frequency channels, both the mobile station and the base station own frequencies used as channels, and switch to the frequencies assigned. On the other hand, the time slot is based on the control of the times of transmission and reception from a reference time. Thus, it is sufficient to merely send and receive signals at the assigned times, so that the time slot assignment can be made easily.

Each cell is not assigned the fixed number of time slots but is dynamically assigned the number of time slots based on the traffic demand in each cell. Also, the number of time slots may be dynamically assigned to each cell taking into consideration QoS for users. As is known, QoS indicates the degree of communication service that the users wish to have. QoS levels are determined, dependent on, for example, the quality of communications, bit rate and loss of calls. The setting of a desired QoS level is performed each time a communication takes place or in accordance with a given contract. The fees may be determined based on the QoS levels. QoS information is managed in, for example, radio base stations, channel control stations, and mobile communication switch stations.

The number of time slots may also be determined taking into account both the traffic demand and QoS.

The assignment of the number of time slots to each cell may be made in a station which controls channel control stations, or a mobile communication switch station. It is also possible for the base station to autonomously carry out the assignment of the number of time slots by obtaining information concerning other base stations. In other words, there are a first method in which the number of time slots is assigned by an apparatus that is commonly provided to cells, and a second method in which the number of time slots is assigned by an apparatus that is provided in each cell.

In the first method, the apparatus commonly provided to cells always monitors the traffic demand in the related cells or QoS for users, and assigns the optimal number of time slots to each cell. It is also possible to assign the optimal number of time slots to each cell by taking into consideration both the traffic demand in the cells and QoS for users.

In the second method, each cell performs autonomous distribution control. Each of the radio base stations located in the periphery of each cell mutually send traffic information to the other stations, and autonomously assigns the optimal number of time slots.

One way to make the autonomous assignment is to determine a given number of cells and proportionally distribute all the time slots used in the determined cells in accordance with the traffic demand, so that the optimal number of time slots can be assigned.

It is possible to assign individual usable time slots to each cell at the time of allocating the number of time slots. Alternatively, it is possible to assign only the number of time slots to each cell and to actually assign time slots within the number of time slots thus assigned when a call is initiated.

### (Time slot assignment when a call is initiated)

There are two methods for time slot assignment. In the first method, each cell is assigned time slots that can be used. The radio base station in each cell assigns idle time slots to each call initiated. In the second method, each time a call is initiated, a time slot is assigned the call.

The second method for assigning a time slot each time a call is initiated may employ either a first process of using a fixed order of assignment of time slots or a second process of assigning a time slot having no interference.

The first process can discriminate time slots which are liable to cause interference and those which are not liable to cause interference by referring to the state of use of time slots assigned. Thus, the base station in each cell preferentially assigns the time slots which are not liable to cause interference. The order of assignment of time slots is determined with regard to each cell in advance. A time slot among the time slots preferentially assigned is sequentially assigned to a call initiated.

The second process detects a time slot which does not cause interference when a call is initiated and assigns the time slot thus detected.

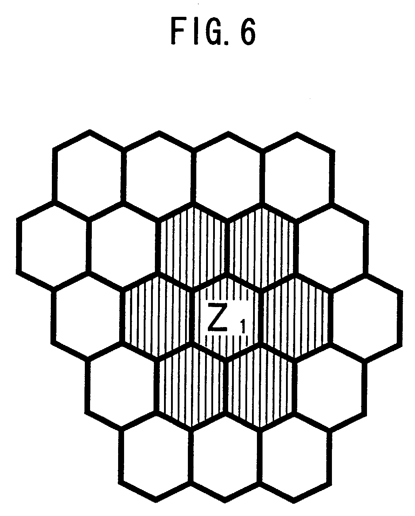

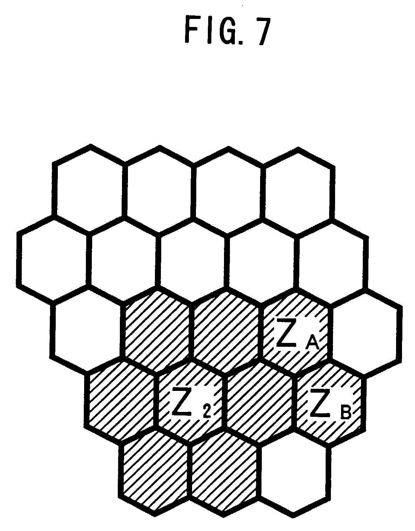

Each cell is associated with a respective, different range in which interference occurs. For example, cell Z₁ shown in Fig. 6 interferes with only the adjacent cells. Cell Z₂ shown in Fig. 7 interferes with not only the adjacent cells but also cells Z_{A} and Z_{B}.

The time slot assignment in the second process may employ a state-of-use table commonly provided to each cell or another state-of-use table provided in the radio base station in each cell.

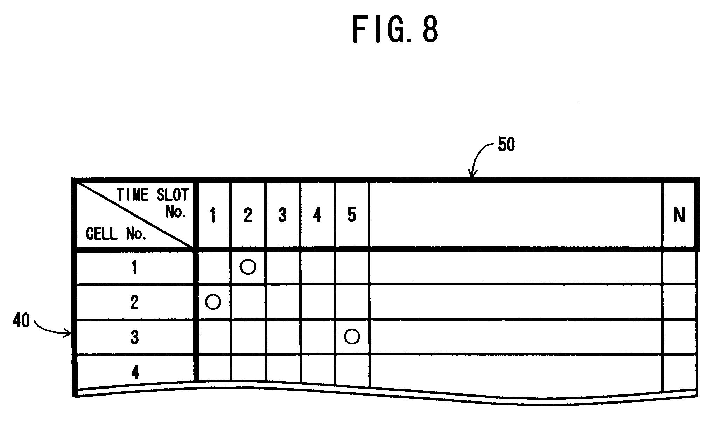

Fig. 8 shows such a state-of-use table. A reference number 50 represents numbers respectively assigned to time slots, and a reference number 40 represents numbers respectively representing cells. A symbol "O" is added to each time slot that is presently in use. Each time slot that is not assigned a symbol "O" is not in use.

When the state-of-use table commonly provided to each cell is referred to at the time of making the time slot assignment, the numbers of all the cells that refer to this table and the state of the time slots in use by these cells are displayed in real time. The state-of-use table is created and updated so that the radio base stations of the cells send the state of the time slots in use regularly or each occasion.

The radio base station in each cell refers to the state-of-use table when a call is initiated, and assigns the call an idle time slot which is not used in the cells which cause interface.

When the state-of-use table provided in the radio base station of each cell, each radio base station is equipped with a state-of-use table related to cells which interferes with the cell of interest. When a call is initiated, the second state-of-use table is referred to so that an idle time slot can be assigned.

The above state-of-use table is created and updated in such a manner that the radio base stations of the related cells send the state of the time slots in use regularly at given time intervals or each occasion.

It is also possible to assign the number of usable time slots in advance. The radio base station in each cell assigns a time slot which does not cause interference within the assigned number of time slots each time a call is initiated.

Each cell has one or more time slots for control use (control time slots) in addition to the time slots for voice communication. A control of initiating and terminating a call is performed through the time slots for control use. The time slots for control use are commonly used by a plurality of cells.

### (Mobile communication system)

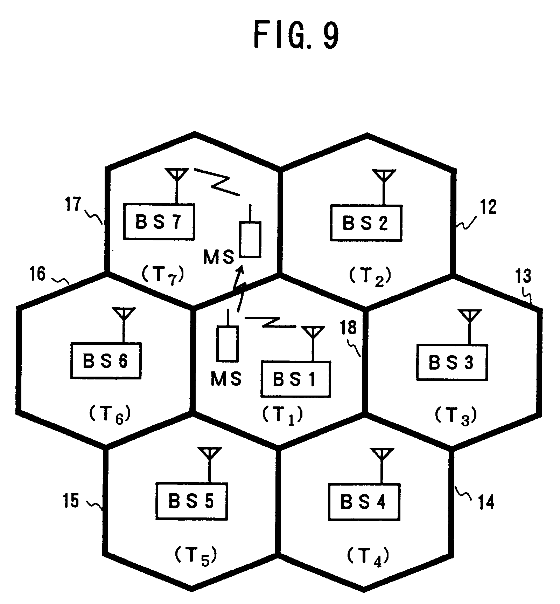

A description will be given, with reference to Fig. 9, of a mobile communication system employing the time slot assignment method of the invention.

In a cell 18, a mobile station MS makes a call using the control time slot. An associated ratio base station BS1 senses the call, and informs the mobile station MS of one time slot, which is one of the time slots assigned to the base station BS1, time slots with comparatively high priority of assignment, or time slots which do not cause interference. The mobile station MS uses the assigned time slot (T₁) as a channel for communication.

The mobile station MS communicates with a radio base station BS1 through the time slot T₁. When the mobile station MS moves to a cell 17, a time slot T₇ is assigned thereto by a radio base station BS7. Then, the mobile station MS communicates through the time slot T₇.

### (Handover)

In the cell 18, the mobile station MS communicates with the radio base station BS1 through the time slot T₁. When the mobile station MS is going to the cell 17, the time slot before cell change and a time slot of the cell located in the traveling direction are simultaneously used at the interface between the adjacent cells. A signal from the other party is concurrently sent by the radio base stations BS1 and BS17. During the concurrent transmission, the mobile station MS simultaneously communicates with the radio base stations BS1 and BS7. The mobile station MS receives the signal having the comparatively high level. At the stage in which the mobile station MS sufficiently enters the cell 17, the mobile station MS can communicate with the radio base station BS7 through only the time slot T7.

The control of time slots in the radio base stations may be autonomously performed by each base station. Alternatively, the control of time slots can be performed by a station which controls channel control stations, and a mobile communication switch station, or an apparatus specifically provided for controlling time slots of the radio base stations.

According to the present invention, it is possible to provide a time slot assignment method capable of transmitting a large amount of information in mobile communication systems in the multimedia age and providing quality of service appropriate for a variety of needs.

When it is required to newly assign a frequency band, it is not necessary to consider a pair of bands. That is, a new band can be defined by using an idle frequency band.

It is further possible to dynamically assign time slots based on the traffic demand and cope with a local traffic change.

It is also possible to present communication services based on QoS and present QoS levels appropriate for a variety of needs.

The present invention is not limited to the specifically disclosed embodiments, and variations and modifications may be made without departing from the scope of the invention.

## Claims

1. A time slot assignment method comprising a step of assigning one or a plurality of time slots to each cell so that the respective number of time slots assigned to each cell can be changed.

2. The time slot assignment method as claimed in claim 1, wherein the respective number of time slots assigned to each cell depends on a traffic demand in each cell and/or QoS for a user.

3. The time slot assignment method as claimed in claim 1, further comprising a step of referring to a state of time slots being used in cells located in a range in which interference occurs, wherein an idle time slot in the range is assigned to the call when a call is initiated.

4. The time slot assignment method as claimed in claim 3, wherein each cell is equipped with a table showing the state of time slots being used in the cells located in the range in which interference occurs, wherein the step of assigning refers to said table.

5. The time slot assignment method as claimed in claim 3, wherein a table showing the state of time slots being used is commonly provided to cells, wherein the step of assigning refers to said table.

6. The time slot assignment method as claimed in claim 1, wherein an order of assignment of time slots is defined in advance, and the step of assigning refers to said order of assignment when a call is initiated.

7. The time slot assignment method as claimed in claim 2, wherein an order of assignment of time slots is defined in advance, and the step of assigning refers to said order of assignment when a call is initiated.

8. The time slot assignment method as claimed in claim 1, further comprising a step of assigning one or a plurality of time slots for control use to each cell, said one or the plurality of time slots being commonly used in said each cell.

9. The time slot assignment method as claimed in claim 5, further comprising a step of assigning one or a plurality of time slots for control use to each cell, said one or the plurality of time slots being commonly used in said each cell.
